# EUROPEAN PATENT SPECIFICATION

(11) **EP 1 816 156 B1**
(45) Date of publication and mention of the grant of the patent: **07.09.2011**
(21) Application number: 05805509.6
(22) Date of filing: 02.11.2005
(51) Int. Cl.: C08L 9/06, C08L 7/00, C08K 3/36, C08K 3/38, C08K 5/092, B60C 1/00

(54) **RUBBER COMPOSITION AND PNEUMATIC TIRE USING THE SAME**
KAUTSCHUKZUSAMMENSETZUNG UND LUFTREIFEN DAMIT
COMPOSITION DE CAOUTCHOUC ET PNEUMATIQUE UTILISANT CETTE COMPOSITION

(30) Priority: 25.11.2004 JP 2004340477
(43) Date of publication of application: 08.08.2007
(73) Proprietor: Bridgestone Corporation, Tokyo 104-8340 (JP)
(72) Inventor: KANEKO, Satoshi, BRIDGESTONE CORP., Tech. Center, Tokyo 187-8531 (JP)
(74) Representative: Whalley, Kevin
(86) International application number: PCT/JP2005/020216
(87) International publication number: WO 2006/057143

(56) References cited:
- JP-A- 10 237 223
- JP-A- 11 269 313
- JP-A- 2001 247 718
- JP-A- 2003 176 378
- JP-A- 2003 183 446

## Description

This invention relates to a rubber composition for a tire and a pneumatic tire using the rubber composition, and more particularly to a rubber composition capable of improving a steering stability of a tire and having excellent vulcanization productivity and extrusion workability.

A tire having low rolling resistance is demanded for reducing fuel consumption of an automobile. In this connection, there are proposed rubber compositions using an inorganic filler such as silica or the like as a filler or using the inorganic filler with carbon black (see JP-A-2000-80205 and JP-A-2002-179841). Tires using such a rubber composition in a tread have low rolling resistance and excellent low fuel consumption but also steering stability on a wet road as typified by wet skid resistance. In the tire, however, there is a problem that the steering stability at a dry state is inferior because the wear resistance is poor and the elastic modulus is low.

As a cause for deteriorating the wear resistance, elastic modulus and so on of the tire when the rubber composition compounded with the inorganic filler such as silica or the like is used in the tread of the tire, it is considered that the affinity of the inorganic filler for a conjugated diene rubber as a rubber component of the tread is low as compared with carbon black usually used as the filler and hence the dispersibility of the inorganic filler into the conjugated diene-based rubber is bad and sufficient reinforcing effect cannot be obtained.

On the contrary, there are developed and used various silane coupling agents for improving the affinity of the inorganic filler for the conjugated diene-based rubber, but the dispersibility of the inorganic filler into the conjugated diene-based rubber is still insufficient and there is a room for improvement.

On the other hand, JP-A-2003-176378 discloses a rubber composition wherein the dispersibility of the inorganic filler into the conjugated diene-based rubber is improved to improve the storage modulus by using a compound having in its molecule at least one reactive group a for the rubber component and two or more adsorption groups b for the inorganic filler.

However, the inventor has further studied and found that the compound having at least one reactive group a for the rubber component and two or more adsorption groups b for the inorganic filler in the same molecule delays the vulcanization rate of the rubber composition, and hence the vulcanization productivity of the tire is deteriorated. On the contrary, if it is intended to maintain the vulcanization rate by adjustment with a vulcanization accelerator as the conventional method, the scorch resistance of the rubber composition is deteriorated and the extrusion workability is also deteriorated, so that it is found that the vulcanization productivity cannot be compensated by the adjustment with the vulcanization accelerator.

It is, therefore, an object of the invention to provide a rubber composition capable of improving the steering stability of the tire and having excellent vulcanization productivity and extrusion workability. Also, it is another object of the invention to provide a pneumatic tire using such a rubber composition and having excellent steering stability and productivity.

The inventor has made various studies in order to achieve the above objects and discovered that the vulcanization rate of the rubber composition can be improved without deteriorating the extrusion workability of the rubber composition by using the inorganic filler, a specified compound having excellent compatibility with the rubber component and affinity for the inorganic filler, and sodium borate in the rubber composition, and the vulcanization productivity of the tire can be highly improved by using the rubber composition in the tire, and as a result the invention has been accomplished.

That is, the rubber composition for a tire according to the invention comprises a rubber component composed of at least one of natural rubber and diene-based synthetic rubbers, a filler at least containing an inorganic filler, a compound represented by the following formula (I):

HOOC-CH=CH-COO-R¹-CO-CH=CH-COOH (I)

[wherein R¹ is a group represented by a formula of -R²O- {wherein R² is an alkylene group or an alkenylene group having a carbon number of 2 to 36 or a bivalent aromatic hydrocarbon group}, a group represented by a formula of -(R³O)ₛ- {wherein R³ is an alkylene group having a carbon number of 2 to 4; and s is a number of 1 to 60 showing an average mole number of an added oxyalkylene group}, a group represented by a formula of -CH₂CH(OH)CH₂O- or a group represented by a formula of -(R⁴O-COR⁵-COO-)ₜR⁴O- {wherein R⁴ is an alkylene group or an alkenylene group having a carbon number of 2 to 18, a bivalent aromatic hydrocarbon group or a group represented by a formula of -(R⁶O)ᵤR⁶- (wherein R⁶ is an alkylene group having a carbon number of 2 to 4; and u is a number of 1 to 30 showing an average mole number of an added oxyalkylene group); R⁵ is an alkylene group or an alkenylene group having a carbon number of 2 to 18 or a bivalent aromatic hydrocarbon group; and t is a number of 1 to 30 as an average value}] and sodium borate.

In the rubber composition according to the invention, an amount of the sodium borate compounded is 5 to 80% by mass, preferably 20 to 50% by mass based on the compound represented by the formula (I). In this case, the vulcanization productivity can be improved while keeping the extrusion workability.

In a preferable embodiment of the rubber composition according to the invention, at least 30% by mass of the filler is the inorganic filler.

In another preferable embodiment of the rubber composition according to the invention, the rubber component comprises 30 to 100% by mass of styrene-butadiene copolymer rubber having a bound styrene content of 35 to 50%. In this case, the rubber component more preferably has an average bound styrene content of not less than 26.5%.

In the invention, the inorganic filler is silica or an inorganic compound represented by the following formula (II):

wM·xSiO_{y}·zH₂O (II)

[wherein M is at least one selected from the group consisting of a metal of aluminium, magnesium, titanium, calcium or zirconium, oxides and hydroxides of these metals, their hydrates, and carbonates of these metals; w is an integer of 1-5, x is an integer of 0-10, y is an integer of 2-5, and z is an integer of 0-10]. In this case, the silica particularly preferably has a nitrogen adsorption specific surface area (N₂SA) of 180 to 270 m²/g.

The rubber composition according to the invention preferably further contains a silane coupling agent at a ratio of 1 to 20% by mass based on the inorganic filler. In this case, the silane coupling agent is more preferably a compound represented by the following formula (III):

A_{c}B_{3-c}Si-X-S_{d}-X-SiA_{c}B_{3-c} (III)

[wherein A is CₑH₂ₑ₊₁O (wherein e is an integer of 1 to 3) or a chlorine atom; B is an alkyl group having a carbon number of 1 to 3; X is a saturated or unsaturated alkylene group having a carbon number of 1 to 9 or an arylene group having a carbon number of 7 to 15; c is an integer of 1 to 3; and d is an integer of 1 or more and may have a distribution, provided that when c is 1, two Bs may be the same or different, and when c is 2 or 3, two or three As may be the same or different].

Moreover, the pneumatic tire according to the invention is characterized by using the rubber composition in any tire member. The tire member is preferably a tread. Furthermore, the pneumatic tire according to the invention is preferably a passenger tire.

According to the invention, there can be provided a rubber composition capable of improving the steering stability of the tire and having excellent vulcanization productivity and extrusion workability by compounding sodium borate in addition to the inorganic filler and the compound of the formula (I). Also, there can be provided a pneumatic tire using the rubber composition having excellent steering stability and productivity.

The invention will be described in detail below. The rubber composition for a tire according to the invention comprises the rubber component composed of at least one of natural rubber and diene-based synthetic rubbers, the filler at least containing the inorganic filler, the compound represented by the formula (I) and sodium borate. Since the rubber composition according to the invention contains the inorganic filler such as silica or the like, the steering stability at the wet state is good, and the rolling resistance is low, and the low fuel consumption is excellent. Also, the compound of the formula (I) has excellent compatibility with the rubber component because of having two or more carbon-carbon double bonds bonded with a carboxyl group and an oxycarbonyl group, and also excellent affinity for the inorganic filler because of having two carboxyl groups. Therefore, the dispersibility of the inorganic filler into the rubber component can be improved to highly elasticize the rubber composition by compounding the compound of the formula (I) into the rubber component together with the inorganic filler, and as a result, the steering stability at the dry state of the tire can be improved by using the rubber composition. Furthermore, the rubber composition of the invention contains sodium borate in addition to the compound of the formula (I), so that scorching is not caused in the extrusion and the vulcanization rate is improved. Therefore, the rubber composition has excellent extrusion workability and the tire using the rubber composition has excellent vulcanization productivity.

As the rubber component in the rubber composition according to the invention are mentioned natural rubber (NR) and diene-based synthetic rubbers. As the diene-based synthetic rubber are mentioned polybutadiene rubber (BR), styrene-butadiene copolymer rubber (SBR), polyisoprene rubber (IR), butyl rubber (IIR) and so on. These rubber components may be used alone or in a combination of two or more. Also, the rubber component preferably comprises 30 to 100% by mass of styrene-butadiene copolymer rubber (SBR) having a bound styrene content of 35 to 50%, and an average bound styrene content of the rubber component is more preferably not less than 26.5%. When the average bound styrene content of the rubber component is not less than 26.5%, the steering stability at the dry state can be highly improved without damaging the steering stability at the wet state and the low fuel consumption. This is due to the fact that when the compound of the formula (I), the styrene-butadiene copolymer rubber having a bound styrene content of not less than 35% and the inorganic filler are used, the affinity among the three ingredients becomes high and high elasticization and control of deteriorating the low fuel consumption (the control of increasing the rolling resistance) can be established simultaneously.

The filler in the rubber composition according to the invention is required to at least contain the inorganic filler, and preferably contains the inorganic filler of not less than 30% by mass. As the filler are mentioned carbon black and the like in addition to the inorganic filler. The tire using the rubber composition inclusive of the inorganic filler has low rolling resistance and excellent low fuel consumption, and also excellent steering stability at the wet state. The inorganic filler is preferably silica or the inorganic compound represented by the formula (II). In the formula (II), M is at least one selected from the group consisting of a metal of aluminium, magnesium, titanium, calcium or zirconium, oxides and hydroxides of these metals, their hydrates, and carbonates of these metals; w is an integer of 1-5, x is an integer of 0-10, y is an integer of 2-5, and z is an integer of 0-10. When both x and z are 0 in the formula (II), the inorganic compound is at least one metal selected from the group consisting of aluminum, magnesium, titanium, calcium and zirconium, an oxide or a hydroxide of the metal.

As the inorganic compound represented by the formula (II) can be used alumina (Al₂O₃) such as γ-alumina, α-alumina or the like; alumina monohydrate (Al₂O₃·H₂O) such as boehmite, diaspore or the like; aluminium hydroxide [Al(OH)₃] such as gibbsite, bayerite or the like; aluminium carbonate [Al₂(CO₃)₃], magnesium hydroxide [Mg(OH)₂], magnesium oxide (MgO), magnesium carbonate (MgCO₃), talc (3MgO·4SiO₂·H₂O), attapulgite (5MgO·8SiO₂·9H₂O), titanium white (TiO₂), titanium black (TiO₂ₙ₋₁), calcium oxide (CaO), calcium hydroxide [Ca(OH)₂], aluminium magnesium oxide (MgO·Al₂O₃), clay (Al₂O₃·2SiO₂), kaolin (Al₂O₃·2SiO₂·2H₂O), pyrophyllite (Al₂O₃·4SiO₂·H₂O), bentonite (Al₂O₃·4SiO₂·2H₂O), aluminium silicate (Al₂SiO₅, Al₄·3SiO₄·5H₂O, and so on), magnesium silicate (Mg₂SiO₄, MgSiO₃, and so on), calcium silicate (Ca₂SiO₄, and so on), aluminium calcium silicate (Al₂O₃·CaO·2SiO₂, and so on), magnesium calcium silicate (CaMgSiO₄), calcium carbonate (CaCO₃), zirconium oxide (ZrO₂), zirconium hydroxide [ZrO(OH)₂·nH₂O], zirconium carbonate [Zr(CO₃)₂], and crystalline aluminosilicates containing charge-compensating hydrogen, alkali metal or alkaline earth metal such as various zeolites. Also, M in the general formula (II) is preferably at least one selected from the group consisting of aluminium metal, oxide and hydroxide of aluminium, their hydrates, and carbonate of aluminium. These inorganic compounds represented by the formula (II) may be used alone or in a combination of two or more. Moreover, these inorganic compounds may be also used in combination with silica.

The inorganic filler is preferably a powder having a particle size of 0.01 to 10 µm. When the particle size is less than 0.01 µm, the milling work is deteriorated although an improvement of the gripping force is not expected, while when it exceeds 10 µm, the storage modulus is enormously lowered and the wear resistance is deteriorated. In view of these effects, the particle size is more preferably within a range of 0.05 to 5 µm.

As the inorganic filler is preferably used one having a specific surface area of 80 to 300 m²/g as measured by a mercury penetration method. The dispersion of the inorganic filler into the rubber component is improved by rendering the specific surface area within 80 to 300 m²/g, and as a result, the processability and the wear resistance of the rubber composition become good. In view of the balance among the reinforcing property, processability and wear resistance and so on, the specific surface area is more preferably within a range of 100 to 250 m²/g. The specific surface area (S_{Hg}) is calculated from S_{Hg} (m²/g) = 2V/r [V = total pore volume (m³/g) and r = average pore radius (m)] assuming that pores are cylindrical.

Among the inorganic fillers, silica is preferable. Particularly, silica having a nitrogen adsorption specific surface area (N₂SA) of 180 to 270 m²/g is preferable. When the N₂SA of silica is less than 180 m²/g, the effect of improving the hysteresis loss of the tire to improve the chipping resistance is low, while when it exceeds 270 m²/g, the viscosity of the rubber composition is raised to highly deteriorate the workability in the milling.

The amount of the filler compounded is not particularly limited, but it is preferably 5 to 120 parts by mass, more preferably 30 to 100 parts by mass, and most preferably 40 to 100 parts by mass based on 100 parts by mass of the rubber component.

The rubber composition according to the invention preferably further contains a silane coupling agent. The wear resistance of the tire can be further improved and tan δ is further lowered by compounding the silane coupling agent. In the rubber composition is included the silane coupling agent at a ratio of preferably 1 to 20% by mass, more preferably 3 to 15% by mass based on the inorganic filler. When the content of the silane coupling agent is less than 1% by mass based on the inorganic filler, the effect by compounding the silane coupling agent may not be sufficiently developed, while when it exceeds 20% by mass, the effect is not further improved to bring about an increase of the cost.

As the silane coupling agent can be used any one of conventionally known silane coupling agents. Among them, at least one selected from the compounds represented by the formula (III) is preferably used. As the compound represented by the formula (III) are mentioned bis(3-triethoxysilylpropyl) tetrasulfide, bis(3-trimethoxysilylpropyl) tetrasulfide, bis(3-methyldimethoxysilylpropyl) tetrasulfide, bis(3-triethoxysilylethyl) tetrasulfide, bis(3-triethoxysilylpropyl) disulfide, bis(3-trimethoxysilylpropyl) disulfide, bis(3-triethoxysilylpropyl) trisulfide and so on, and commercially available products can be used. These silane coupling agents may be used alone or in a combination of two or more.

The rubber composition according to the invention is required to contain the compound represented by the formula (I). The amount of the compound of the formula (I) compounded is preferably 0.5 to 20 parts by mass, more preferably 0.5 to 10 parts by mass, most preferably 1 to 5 parts by mass based on 100 parts by mass of the rubber component. When the amount of the compound of the formula (I) compounded is less than 0.5 parts by mass, the effect of improving the elastic modulus of the rubber composition is small and the steering stability at the dry state and the wear resistance cannot be sufficiently improved, while when it exceeds 20 parts by mass, the elastic modulus becomes too high and also the cost is increased.

In the formula (I), R¹ is a group represented by the formula of -R²O-, a group represented by the formula of -(R³O)ₛ-, a group represented by the formula of -CH₂CH(OH)CH₂O- or a group represented by the formula of -(R⁴O-COR⁵-COO-)ₜR⁴O-. In this case, R² is an alkylene group or an alkenylene group having a carbon number of 2 to 36 or a bivalent aromatic hydrocarbon group, preferably an alkylene group having a carbon number of 2 to 18 or phenylene group, and more preferably an alkylene group having a carbon number of 4 to 12. Also, R³ is an alkylene group having a carbon number of 2 to 4, preferably ethylene group or propylene group, and s is a number of 1 to 60, preferably 2 to 40, more preferably 4 to 30 showing an average mole number of an added oxyalkylene group. R⁴ is an alkylene group or an alkenylene group having a carbon number of 2 to 18, a bivalent aromatic hydrocarbon group or a group represented by the formula of -(R⁶O)ᵤR⁶- (wherein R⁶ is an alkylene group having a carbon number of 2 to 4; and u is a number of 1 to 30, preferably 1 to 20, and more preferably 2 to 15 showing an average mole number of an added oxyalkylene group). R⁵ is an alkylene group or an alkenylene group having a carbon number of 2 to 18 or a bivalent aromatic hydrocarbon group, preferably an alkylene group having a carbon number of 2 to 12 or phenylene group, and more preferably an alkylene group having a carbon number of 2 to 8. Also, t is a number of 1 to 30, preferably 1 to 20, and more preferably 1 to 15 as an average value.

As the compound represented by the formula (I) are mentioned dimaleates of alkylenediols such as glycerin dimaleate, 1,4-butanediol dimaleate, 1,6-hexanediol dimaleate and the like; difumarates of alkylenediols such as 1,6-hexanediol difumarate and the like; dimaleates of polyoxyalkylene glycols such as PEG 200 dimaleate, PEG 600 dimaleate (wherein each of PEG 200 and PEG 600 represents polyethylene glycol having an average molecular weight of 200 or 600); both terminal-carboxylic acid type polyalkylene glycol/maleic acid polyesters such as polybutylene maleate having carboxyl groups at both terminals and poly(PEG 200) maleate having carboxyl groups at both terminals; polybutylene adipate maleate having carboxyl groups at both terminals, difumarates of polyoxyalkylene glycols such as PEG 600 difumarate and the like; and both terminal-carboxylic acid type polyalkylene glycol/fumaric acid polyesters such as polybutylene fumarate having carboxyl groups at both terminals and poly(PEG 200) fumarate having carboxyl groups at both terminals.

The compound having the formula (I) has a molecular weight of preferably not less than 250, more preferably 250 to 5000, and particularly preferably 250 to 3000. When the molecular weight is within the above range, it is not only preferable in view of a safety due to a high flash point but also preferable in view of the working environment due to less fume. These compounds of the formula (I) may be used alone or in a combination of two or more.

The rubber composition according to the invention is required to further contain sodium borate. As the sodium borate are mentioned sodium orthoborate (Na₃BO₃), sodium diborate (Na₄B₂O₅), sodium metaborate (NaBO₂), sodium tetraborate (Na₂B₄O₇), sodium pentaborate (Na₄B₁₀O₁₇), sodium octaborate (Na₂B₈O₁₃) and so on. Among them, sodium tetraborate is preferable. The sodium tetraborate may be referred to as pyroborate or borax and includes decahydrate, pentahydrate and anhydride, and even if any of them is used, the effect is provided. The amount of sodium borate compounded in the rubber composition according to the invention is 5 to 80% by mass, preferably 20 to 50% by mass based on the compound of the formula (I). When the amount of sodium borate used is less than 5% by mass based on the compound of the formula (I), the effect of improving the vulcanization productivity is low, while when it exceeds 80% by mass, the scorch resistance in the extrusion is deteriorated and as a result, the extrusion workability is deteriorated.

In the rubber composition of the invention can be properly compounded additives usually used in the rubber industry such as a softener, an antioxidant, a vulcanizing agent, a vulcanization accelerator and the like in addition to the above rubber component, the filler, the silane coupling agent, the compound of the formula (I) and sodium borate in accordance with the use purpose. As these additives can be preferably used commercially available ones. Moreover, the rubber composition can be produced by compounding the rubber component with the inorganic filler, the compound of the formula (I) and the sodium borate and, if necessary, the properly selected additives and milling, warming, extruding and so on.

The pneumatic tire according to the invention is suitable for a passenger tire because the rubber composition capable of improving the steering stability of the tire as mentioned above is applied to a tire member. The tire according to the invention has the conventionally known structure and is not particularly limited, and can be produced by the usual method. As a gas filled into the pneumatic tire of the invention can be used usual air or air having a regulated partial oxygen pressure but also an inert gas such as nitrogen, argon or helium.

The following examples are given in illustration of the invention and are not intended as limitations thereof.

A rubber composition having a compounding recipe as shown in Table 1 is prepared, and then the Mooney viscosity, scorch resistance and vulcanization rate are evaluated by the following methods. The results are shown in Table 1.

### (1) Mooney viscosity and scorch resistance

The Mooney viscosity ML₁₊₄(130°C) at 130°C and Mooney scorch time (t5) at 130°C are measured according to JIS K6300-1 by using a Mooney viscometer, which are shown by an index on the basis that the Mooney viscosity and Mooney scorch time of the rubber composition in Comparative Example 1 are 100. As to the Mooney viscosity, the smaller the index value, the lower the Mooney viscosity. As to the Mooney scorch time, the larger the index value, the more scorching is hardly caused and the better the scorch resistance. Moreover, the extrusion workability of the rubber composition is evaluated from these results. In Table 1, ○ means a good workability, Δ means that the workability is somewhat deteriorated and × means that the workability is deteriorated.

### (2) Vulcanization rate

The vulcanization characteristics at 160°C of each rubber composition are tested according to JIS K6300-2 by using a rheometer. Concretely, when a maximum value of a torque is Fmax and a minimum value of the torque is Fmin, a time (T0.9) for arriving at a torque of {(Fmax-Fmin)x0.9+Fmin} is determined and represented by an index on the basis that T0.9 of the rubber composition in Comparative Example 1 is 100. The smaller the index value, the higher and the better the vulcanization rate. Moreover, the vulcanization productivity of the rubber composition is evaluated from the results. In Table 1, ○ means a good productivity, ○~Δ means that the productivity is slightly deteriorated, Δ means that the productivity is somewhat deteriorated and × means that the productivity is deteriorated.

Then, there is prepared a passenger tire (inner pressure: 196 kPa) having a tire size of 195/60R15 by using the above rubber composition in the tread and vulcanizing under a normal vulcanization condition, and the steering stability at dry state is evaluated by the following method. The result is shown in Table 1.

### (3) Steering stability at dry state

A vehicle is actually run on a dry road surface in a test course to comprehensively evaluate the driving performance, braking performance, handle response and controllability in the steering, wherein ○ means good, and × means bad.

**Table 1**

| | | | Comparative Example 1 | Comparative Example 2 | Comparative Example3 | Example 1 | Example 2 | Example 3 | Comparative Example 4 |
|---|---|---|---|---|---|---|---|---|---|
| Rubber component | SBR *1 | | 137.5 | 137.5 | 137.5 | 137.5 | 137.5 | 137.5 | 137.5 |
| Filler | Carbon black(N234) *2 | | 20 | 20 | 20 | 20 | 20 | 20 | 20 |
| | Silica *3 | | 60 | 60 | 60 | 60 | 60 | 60 | 60 |
| Antioxidant 6PPD *4 | | | 1 | 1 | 1 | 1 | 1 | 1 | 1 |
| Stearic acid | | | 2 | 2 | 2 | 2 | 2 | 2 | 2 |
| Wax | | parts by mass | 2 | 2 | 2 | 2 | 2 | 2 | 2 |
| Zinc white | | | 3 | 3 | 3 | 3 | 3 | 3 | 3 |
| Vulcanization accelerator CZ *5 | | | 1.5 | 1.5 | 1.2 | 1.5 | 1.5 | 1.5 | 1.5 |
| Vulcanization accelerator DPG *6 | | | 1.5 | 1.5 | 1.8 | 1.5 | 1.5 | 1.5 | 1.5 |
| Sulfur | | | 1.7 | 1.7 | 1.7 | 1.7 | 1.7 | 1.7 | 1.7 |
| Silane coupling agent *7 | | | 6 | 6 | 6 | 6 | 6 | 6 | 6 |
| Compound (Z) *8 | | | - | 2.5 | 2.5 | 2.5 | 2.5 | 2.5 | 2.5 |
| Sodium borate *9 | | | - | - | - | 0.5 | 1 | 2 | 3 |
| Sodium borate/Compound (Z) | | mass ratio (%) | - | 0 | 0 | 20 | 40 | 80 | 120 |
| Mooney viscosity (ML1+4) | | index | 100 | 85 | 85 | 87 | 84 | 85 | 89 |
| Mooney scorch time (t5) | | | 100 | 110 | 80 | 105 | 98 | 92 | 82 |
| Vulcanization rate (T0.9) | | | 100 | 120 | 110 | 104 | 96 | 88 | 76 |
| Steering stability at dry state | | - | × | ○ | ○ | ○ | ○ | ○ | ○ |
| Extrusion workability | | - | Δ | ○ | × | ○ | ○ | Δ | × |
| Vulcanization productivity | | - | ○ | × | Δ | ○~Δ | ○ | ○ | ○ |

| | | | | | | | | | |
|---|---|---|---|---|---|---|---|---|---|
| *1 SBR#1721 manufactured by Amerypol Synpol, [bound styrene content = 40%, oil-extended by 37.5 parts by mass of aromatic oil based on 100 parts by mass of a rubber component]. *2 SHOWBLACK N234 manufactured by Showa Cabot, N₂SA=123 m²/g. *3 Nipsil AQ manufactured by Nippon Silica Industrial Co., Ltd., N₂SA=212 m²/g_{.} *4 N-(1,3-dimethylbutyl)-N'-phenyl-p-phenylenedamine, NOCRAC 6C manufactured by OUCHISHINKO CHEMICAL INDUSTRIAL CO., LTD. *5 N-cyclohexyl-2-benzothiazyl sulfenamide, NOCCELER CZ manufactured by OUCHISHINKO CHEMICAL INDUSTRIAL CO., LTD. *6 1,3-diphenyl guanidine, NOCCELER D-P manufactured by OUCHISHINKO CHEMICAL INDUSTRIAL CO., LTD. *7 Bis(3-triethoxysilylpropyl) tetrasulfide, Si69 manufactured by Degussa. *8 Poly PEG 200 maleate polyester, [a compound of the formula (I) wherein R¹ is the group represented by -(R⁴O-COR⁵-COO-)ₜR⁴O-; R⁴ is -(R⁶O)ᵤR⁶- (wherein R⁶ is ethylene group, and u=3.5); R⁵ is -CH=CH-; and t=4]. *9 Sodium tetraborate decahydrate. | | | | | | | | | |

As seen from Table 1, the steering stability at the dry state of the tire is improved by using in the tread the rubber composition compounded with the compound (Z). However, the rubber composition wherein the compound (Z) is compounded but sodium borate is not compounded has low vulcanization rate and bad vulcanization productivity. Moreover, it is tried to improve the vulcanization rate in the rubber composition of Comparative Example 3 by decreasing the amount of the vulcanization accelerator CZ and increasing the amount of the vulcanization accelerator DPG as compared with the rubber composition of Comparative Example 2, but in this case the Mooney scorch time becomes very short, scorching is easily caused and the extrusion workability is deteriorated.

On the other hand, in the rubber compositions compounded with the compound (Z) and sodium borate of Examples 1-3, the vulcanization rate is high, the vulcanization productivity is high, the Mooney scorch time is sufficiently long, and the deterioration of the extrusion workability is suppressed. Moreover, the rubber composition of Comparative Example 4 is high in the vulcanization rate, but short in the Mooney scorch time and bad in the extrusion workability because the amount of sodium borate compounded is excessively large based on the compound (Z).

## Claims

1. A rubber composition for a tire comprising a rubber component composed of at least one of natural rubber and diene-based synthetic rubbers, a filler at least containing an inorganic filler, a compound represented by the following formula (I):
HOOC-CH=CH-COO-R¹-CO-CH=CH-COOH (I)
[wherein R¹ is a group represented by a formula of -R²O- {wherein R² is an alkylene group or an alkenylene group having a carbon number of 2 to 36 or a bivalent aromatic hydrocarbon group}, a group represented by a formula of -(R³O)ₛ- {wherein R³ is an alkylene group having a carbon number of 2 to 4; and s is a number of 1 to 60 showing an average mole number of an added oxyalkylene group}, a group represented by a formula of -CH₂CH(OH)CH₂O- or a group represented by a formula of -(R⁴O-COR⁵-COO-)ₜR⁴O- {wherein R⁴ is an alkylene group or an alkenylene group having a carbon number of 2 to 18, a bivalent aromatic hydrocarbon group or a group represented by a formula of -(R⁶O)ᵤR⁶- (wherein R⁶ is an alkylene group having a carbon number of 2 to 4; and u is a number of 1 to 30 showing an average mole number of an added oxyalkylene group); R⁵ is an alkylene group or an alkenylene group having a carbon number of 2 to 18 or a bivalent aromatic hydrocarbon group; and t is a number of 1 to 30 as an average value}] and sodium borate;
wherein an amount of the sodium borate compounded is 5 to 80% by mass based on the compound represented by the formula (I).

2. A rubber composition for a tire according to claim 1, wherein the amount of the sodium borate compounded is 20 to 50% by mass based on the compound represented by the formula (I).

3. A rubber composition for a tire according to claim 1 or 2, wherein at least 30% by mass of the filler is the inorganic filler.

4. A rubber composition for a tire according to any of claims 1 to 3, wherein the rubber component comprises 30 to 100% by mass of styrene-butadiene copolymer rubber having a bound styrene content of 35 to 50%.

5. A rubber composition for a tire according to claim 4, wherein the rubber component has an average bound styrene content of not less than 26.5%.

6. A rubber composition for a tire according to any of claims 1 to 5, wherein the
inorganic filler is silica.

7. A rubber composition for a tire according to claim 6, wherein the silica has a nitrogen adsorption specific surface area (N₂SA) of 180 to 270 m²/g.

8. A rubber composition for a tire according to any of claims 1 to 5, wherein the
inorganic filler is an inorganic compound represented by the following formula (II):
wM·xSiO_{y}·zH₂O (II)
[wherein M is at least one selected from the group consisting of a metal of aluminum, magnesium, titanium, calcium or zirconium, oxides and hydroxides of these metals, their hydrates, and carbonates of these metals; w is an integer of 1-5, x is an integer of 0-10, y is an integer of 2-5, and z is an integer of 0-10].

9. A rubber composition for a tire according to any one of claims to 8 which further contains a silane coupling agent at a ratio of 1 to 20% by mass based on the inorganic filler.

10. A rubber composition for a tire according to claim 9, wherein the silane coupling agent is a compound represented by the following formula (III):
A_{c}B_{3-c}Si-X-S_{d}-X-SiA_{c}B_{3-c} (III)
[wherein A is CₑH₂ₑ₊₁O (wherein e is an integer of 1 to 3) or a chlorine atom; B is an alkyl group having a carbon number of 1 to 3; X is a saturated or unsaturated alkylene group having a carbon number of 1 to 9 or an arylene group having a carbon number of 7 to 15; c is an integer of 1 to 3; and d is an integer of 1 or more and may have a distribution, provided that when c is 1, two Bs may be the same or different, and when c is 2 or 3, two or three As may be the same or different].

11. A pneumatic tire using a rubber composition for a tire as claimed in any one of claims 1 to 10 in a tire member.

12. A pneumatic tire according to claim 11, which is a passenger tire.

13. A pneumatic tire according to claim 11, wherein the tire member is a tread.

## Patentansprüche

1. Kautschukzusammensetzung für einen Reifen, umfassend eine Kautschukkomponente bestehend aus mindestens einem Naturkautschuk und einem synthetischen Kautschuk auf Dienbasis, einen Füllstoff, der mindestens einen anorganischen Füllstoff enthält, eine Verbindung, die durch die folgende Formel (I) dargestellt ist:
HOOC-CH=CH-COO-R¹-CO-CH=CH-COOH (I)
[wobei R¹ eine Gruppe, die durch eine Formel -R²O- dargestellt ist {wobei R² eine Alkylengruppe oder eine Alkenylengruppe, die eine Kohlenstoffzahl von 2 bis 36 aufweist, oder eine zweiwertige aromatische Kohlenwasserstoffgruppe ist}, eine Gruppe, die durch eine Formel -(R³O)ₛ- dargestellt ist {wobei R³ eine Alkylengruppe, die eine Kohlenstoffzahl von 2 bis 4 aufweist, ist; und s eine Zahl von 1 bis 60 ist, die eine durchschnittliche Molzahl einer hinzugesetzten Oxyalkylengruppe anzeigt}, eine Gruppe, die durch eine Formel -CH₂CH(OH)CH₂O- dargestellt ist oder eine Gruppe, die durch eine Formel -(R⁴O-COR⁵-COO)ₜR⁴O- dargestellt ist {wobei R⁴ eine Alkylengruppe oder eine Alkenylengruppe, die eine Kohlenstoffzahl von 2 bis 18 aufweist, eine zweiwertige aromatische Kohlenwasserstoffgruppe oder eine Gruppe, die durch die Formel -(R⁶O)ᵤR⁶-dargestellt ist, ist (wobei R⁶ eine Alkylengruppe, die eine Kohlenstoffzahl von 2 bis 4 aufweist, ist; und u eine Zahl von 1 bis 30 ist, die eine durchschnittliche Molzahl einer hinzugesetzten Oxyalkylengruppe anzeigt); R⁵ eine Alkylengruppe oder eine Alkenylengruppe, die eine Kohlenstoffzahl von 2 bis 18 aufweist oder eine zweiwertige aromatische Kohlenwasserstoffgruppe ist; und t eine Zahl von 1 bis 30 als Durchschnittswert ist}] und Natriumborat;
wobei eine Menge des compoundierten Natriumborats 5 bis 80 Masse-%, auf die durch die Formel (I) dargestellte Verbindung bezogen, ist.

2. Kautschukzusammensetzung für einen Reifen nach Anspruch 1, wobei die Menge des compoundierten Natriumborats 20 bis 50 Masse-%, auf die durch die Formel (I) dargestellte Verbindung bezogen, beträgt.

3. Kautschukzusammensetzung für einen Reifen nach Anspruch 1 oder 2, wobei mindestens 30 Masse-% des Füllstoffs aus dem anorganischen Füllstoff bestehen.

4. Kautschukzusammensetzung für einen Reifen nach einem der Ansprüche 1 bis 3, wobei die Kautschukkomponente 30 bis 100 Masse-% Styrol-Butadien-Copolymerkautschuk umfasst, der einen Gehalt an gebundenem Styrol von 35 bis 50 % aufweist.

5. Kautschukzusammensetzung für einen Reifen nach Anspruch 4, wobei die Kautschukkomponente einen durchschnittlichen Gehalt an gebundenem Styrol von nicht weniger als 26,5 % aufweist.

6. Kautschukzusammensetzung für einen Reifen nach einem der Ansprüche 1 bis 5, wobei der anorganische Füllstoff Siliciumdioxid ist.

7. Kautschukzusammensetzung für einen Reifen nach Anspruch 6, wobei das Siliciumdioxid einen für die Stickstoffabsorption spezifischen Oberflächenbereich (N₂SA) von 180 bis 270 m²/g aufweist.

8. Kautschukzusammensetzung für einen Reifen nach einem der Ansprüche 1 bis 5, wobei der anorganische Füllstoff eine anorganische Verbindung ist, die durch die folgende Formel (II) dargestellt ist:
wM·xSiO₂·zH₂O (II)
[wobei M mindestens eines ist ausgewählt aus der Gruppe bestehend aus einem Metall von Aluminium, Magnesium, Titan, Calcium oder Zirconium, Oxiden und Hydroxiden dieser Metalle, ihren Hydraten und Carbonaten dieser Metalle; w eine ganze Zahl von 1 bis 5 ist, x eine ganze Zahl von 0 bis 10 ist, y eine ganze Zahl von 2 bis 5 ist und z eine ganze Zahl von 0 bis 10 ist].

9. Kautschukzusammensetzung für einen Reifen nach einem der Ansprüche 1 bis 8, die des Weiteren ein Silankopplungsmittel in einem Verhältnis von 1 bis 20 Masse-%, auf den anorganischen Füllstoff bezogen, enthält.

10. Kautschukzusammensetzung für einen Reifen nach Anspruch 9, wobei das Silankopplungsmittel eine Verbindung ist, die durch die folgende Formel (III) dargestellt ist:
A_{c}B_{3-c}Si-X-S_{d}-X-SiA_{c}B_{3-c} (III)
[wobei A CₑH_{2c+1}O (wobei e eine ganzer Zahl von 1 bis 3 ist) oder ein Chloratom ist; B eine Alkylgruppe ist, die eine Kohlenstoffzahl von 1 bis 3 aufweist; X eine gesättigte oder ungesättigte Alkylengruppe, die eine Kohlenstoffzahl von 1 bis 9 aufweist, oder eine Arylengruppe ist, die eine Kohlenstoffzahl von 7 bis 15 aufweist; c eine ganze Zahl von 1 bis 3 ist; d eine ganze Zahl von 1 oder mehr ist und eine Verteilung aufweisen kann, vorausgesetzt, dass, wenn c 1 beträgt, zwei B gleich oder verschieden sein können, und wenn c 2 oder 3 beträgt, zwei oder drei A gleich oder verschieden sein können].

11. Luftreifen, bei dem eine Kautschukzusammensetzung für einen Reifen nach einem der Ansprüche 1 bis 10 in einem Reifenteil verwendet wird.

12. Luftreifen nach Anspruch 11, der ein Personenwagenreifen ist.

13. Luftreifen nach Anspruch 11, wobei der Reifenteil eine Lauffläche ist.

## Revendications

1. Composition de caoutchouc pour un pneu, comprenant un constituant de caoutchouc composé d'au moins un caoutchouc naturel et de caoutchoucs synthétiques à base de diène, une charge contenant au moins une charge inorganique, un composé représenté par la formule (I) suivante:
HOOC-CH=CH-COO-R¹-CO-CH=CH-COOH (I)
[dans laquelle R¹ est un groupe représenté par une formule -R²-O- {dans laquelle R² est un groupe alkylène ou un groupe alcénylène ayant un nombre de carbones de 2 à 36 ou un groupe hydrocarboné aromatique bivalent}, un groupe représenté par une formule -(R³O)ₛ- {où R³ est un groupe alkylène ayant un nombre de carbones de 2 à 4; et s est un nombre de 1 à 60 représentant un nombre molaire moyen d'un groupe oxyalkylène ajouté}, un groupe représenté par une formule de -CH₂CH(OH)CH₂O- ou un groupe représenté par une formule de -(R⁴O-COR⁵-COO-)ₜR⁴O- {dans laquelle R⁴ est un groupe alkylène ou un groupe alcénylène ayant un nombre de carbones de 2 à 18, un groupe hydrocarboné aromatique bivalent ou un groupe représenté par une formule de -(R⁶O)ᵤR⁶- (où R⁶ est un groupe alkylène ayant un nombre de carbones de 2 à 4; et u est un nombre de 1 à 30 représentant un nombre molaire moyen d'un groupe oxyalkylène ajouté); R⁵ est un groupe alkylène ou un groupe alcénylène ayant un nombre de carbones de 2 à 18 ou un groupe hydrocarboné aromatique bivalent; et t est un nombre de 1 à 30 en tant que valeur moyenne}] et du borate de sodium;
dans laquelle une quantité du borate de sodium mélangée est de 5 à 80% en masse par rapport au composé représenté par la formule (I).

2. Composition de caoutchouc pour un pneu selon la revendication 1, dans laquelle la quantité du borate de sodium mélangée est de 20 à 50% en masse par rapport au composé représenté par la formule (I).

3. Composition de caoutchouc pour un pneu selon la revendication 1 ou 2, dans laquelle au moins 30% en masse de la charge est la charge inorganique.

4. Composition de caoutchouc pour un pneu selon l'une quelconque des revendications 1 à 3, dans laquelle le constituant de caoutchouc comprend 30 à 100% en masse de caoutchouc de copolymère styrène-butadiène ayant une teneur en styrène lié de 35 à 50%.

5. Composition de caoutchouc pour un pneu selon la revendication 4, dans laquelle le constituant de caoutchouc a une teneur moyenne en styrène lié non inférieure à 26,5%.

6. Composition de caoutchouc pour un pneu selon l'une quelconque des revendications 1 à 5, dans laquelle la charge inorganique est une silice.

7. Composition de caoutchouc pour un pneu selon la revendication 6, dans laquelle la silice a une surface spécifique par adsorption d'azote (N₂SA) de 180 à 270m²/g.

8. Composition de caoutchouc pour un pneu selon l'une quelconque des revendications 1 à 5, dans laquelle la charge inorganique est un composé inorganique représenté par la formule (II) suivante:
wM.xSiO_{y}.zH₂O (II)
[dans laquelle M est au moins un ingrédient choisi dans le groupe constitué par un métal parmi l'aluminium, le magnésium, le titane, le calcium ou le zirconium, les oxydes et hydroxydes de ces métaux, leurs hydrates, et les carbonates de ces métaux; w est un entier de 1 à 5, x est un entier de 0 à 10, y est un entier de 2 à 5, et z est un entier de 0 à 10].

9. Composition de caoutchouc pour un pneu selon l'une quelconque des revendications 1 à 8, qui contient en outre un agent de couplage silane à un taux de 1 à 20% en masse par rapport à la charge inorganique.

10. Composition de caoutchouc pour un pneu selon la revendication 9, dans laquelle l'agent de couplage silane est un composé représenté par la formule (III) suivante:
A_{c}B_{3-c}Si-X-S_{d}-X-SiA_{c}B_{3-c} (III)
[dans laquelle A est CₑH_{2c+1}O (où e est un entier de 1 à 3) ou un atome de chlore; B est un groupe alkyle ayant un nombre de carbones de 1 à 3; X est un groupe alkylène saturé ou insaturé ayant un nombre de carbones de 1 à 9 ou un groupe arylène ayant un nombre de carbones de 7 à 15; c est un entier de 1 à 3; et d est un entier de 1 ou plus et peut avoir une distribution telle que lorsque c est 1, deux B peuvent être identiques ou différents, et lorsque c est 2 ou 3, deux ou trois A peuvent être identiques ou différents].

11. Pneumatique utilisant une composition de caoutchouc pour un pneu telle que revendiquée dans l'une quelconque des revendications 1 à 10 dans un élément de pneu.

12. Pneumatique selon la revendication 11, qui est un pneu de véhicule de tourisme.

13. Pneumatique selon la revendication 11, dans lequel l'élément de pneu est une bande de roulement.
